# EUROPÄISCHE PATENTANMELDUNG

(11) **EP 0 760 294 A2**
(43) Veröffentlichungstag der Anmeldung: **05.03.1997**
(21) Anmeldenummer: 96890136.3
(22) Anmeldetag: 22.08.1996
(51) Int. Cl.: B60B 17/00

(54) **Rad für ein Schienenfahrzeug und Verfahren zur Herstellung desselben**

(30) Priorität: 24.08.1995 AT 1428/95
(71) Anmelder: Siemens SGP Verkehrstechnik GmbH, 1110 Wien (AT)
(72) Erfinder: Haigermoser, Andreas, Dr., 8042 Graz (AT); Walenta, Reinhard, Dr., 8010 Graz (AT)
(74) Vertreter: Peham, Alois

(57) **Zusammenfassung**

Die Erfindung betrifft ein Rad für ein Schienenfahrzeug und ein Verfahren zur Herstellung desselben. Um ein Rad zu schaffen, bei dem trotz guter Bogenlaufeigenschaften eine hohe Stabilität bei hcher Geschwindigkeit gewährleistet ist und das auf durchschnittlich verschlissene Schienenprofile abgestimmt ist, ist vorgesehen, daß das Profil des Rades mit einem Profilauslauf an der Radaußenseite, einer aus einem konvexen und darauffolgenden konkaven Teil bestehenden gekrümmten Lauffläche und einem Spurkranz an der Radinnenseite mit einer gegenüber der Horizontalen um zumindest 65° geneigten äußeren Spurkranzflanke an das durchschnittliche Profil einer Schiene, dessen Krümmungs- und Steigungsverlauf ermittelt wird angepaßt wird, in der Art, daß das Profil des Rades in jedem Punkt eine absolut kleinere Krümmung als jene des Schienenprofils vorzugsweise mit stetig zunehmendem Abstand zu größeren Werten des Tangens der Steigung hin. Das erfindungsgemäße Radprofil wird nicht durch Funktionssegmente beschrieben, sondern durch Integration des Funktionsverlaufes der Profilkrümmung in Abhängigkeit der Profilsteigung generiert. Das Profil ist durch einen stetigen Krümmungsverlauf charakterisiert, wodurch gleichmäßige Berührungsverhältnisse beim Rad/Schiene-Kontakt resultieren.

## Beschreibung

Die Erfindung betrifft ein Rad für ein Schienenfahrzeug, insbesondere zum Einsatz in Trieb- oder Laufdrehgestellen nach dem Oberbegriff des Patentanspruchs 1 sowie ein Verfahren zur Herstellung desselben.

Der Rad/Schiene-Kontakt hat großen Einfluß auf das Laufverhalten von Schienenfahrzeugen und wird durch die Form des Radprofils und des Schienenprofils sowie durch die Abstimmung dieser Profile aufeinander bestimmt. Bei bisherigen Radprofilen war eine Optimierung des Rad/Schiene-Kontakts für die Geradeausfahrt mit einer Verschlechterung der Bogenlaufeigenschaften verbunden und umgekehrt. Das sehr weit verbreitete herkömmliche Radprofil UIC-ORE S1002 weist bei relativ guten Bogenlaufeigenschaften bei Geradeausfahrt mit hohen Geschwindigkeiten und bei engen Spurweiten ungünstige Stabilitätseigenschaften auf. Überdies verändern sich durch den auftretenden Verschleiß an Rad und Schiene die Profile des Rades oft ungleichmäßig, wodurch sich die Berührbedingungen ändern können, was zu unvorhersehbaren und negativen Einflüssen auf das Fahrverhalten der Schienenfahrzeuge und den weiteren Verschleiß führt.

Bei bekannten Radprofilen wird die Profilkontur aus verschiedenen Funktionssegmenten (Gerade, Kreise, Ellipsen, logarithmische Funktionen, Polynomen usw.) zusammengesetzt. An Übergängen solcher Funktionen bzw. an den Grenzen weist die Profilkrümmung Sprünge auf. welche sich negativ auf das Verhalten des Rades auswirken. Aus der EP 403 653 A1 ist eine Eisenbahnradfelge mit einem Laufflächenprofil bekannt, bestehend aus einem konkaven Laufflächenabschnitt, der durch die Funktion eines Rotationsparaboloids beschrieben wird, verbunden mit einem konvexen Flächenabschnitt in Form einer glatten Kurve, welche durch eine bestimmte Funktion beschrieben wird, und schließlich einen Profilauslauf in Form eines kegeligen Flächenabschnitts. Die AT 2 410 E beschreibt ein Radlaufflächenprofil eines Schienenfahrzeuges. bei dem ein konkaver Abschnitt des Laufflächenprofils aus mehreren glatt ineinander übergehenden Bögen mit ansteigenden Durchmessern besteht.

Aufgabe der vorliegenden Erfindung ist die Schaffung eines Rades unter Vermeidung der oben erwähnten Nachteile, welches bei guten Bogenlaufeigenschaften, einen geringen Verschleiß, geringe Lärmentwicklung zusammen mit noch besserem Stabilitätsverhalten bei Geradeausfahrt mit hoher Geschwindigkeit gewährleistet und dabei speziell auf durchschnittlich verschlissene Schienenprofile abgestimmt ist.

Die Aufgabe wird durch die Merkmale des kennzeichnenden Teils des Patentanspruches 1 gelöst.

Das erfindungsgemäße Rad besitzt eine über seine Breite kontinuierlich verlaufende Profilkontur. die optimal an das Profil durchschnittlich verschlissener Schienen angepaßt ist. Das Radprofil des erfindungsgemäßen Rades ergibt eine gegenüber herkömmlichen Radprofilen wesentlich verringerte äquivalente Konizität, welche das Stabilitätsverhalten des Schienenfahrzeugs widerspiegelt. Damit resultiert eine gute Spurstabilität bei Hochgeschwindigkeitsfahrt trotz ausreichender Rollradiendifferenz für verschleiß- und geräuscharmen Bogenlauf. Für diese Abstimmung ist hauptsächlich die sich stetig ändernde Krümmung des Profils sowie der flachere Verlauf der Lauffläche des Rades über eine größere Breite verantwortlich. Durch die erfindungsgemäße Gestaltung des Profils werden auch die Verschleißeigenschaften verbessert, da sich die Berührellipsen zwischen Rad und Schiene bei relativer Querverschiebung nur wenig verändern und somit der Verschleiß des Rad- und auch Schienenprofils gleichmäßig über das gesamte Profil auftritt. Somit bleibt die Profilkontur und die damit verbundenen Laufeigenschaften weitgehend konstant erhalten.

Durch die Merkmale der Patentansprüche 2 bis 8 werden vorteilhafte Ausführungsformen der Erfindung beschrieben, welche die oben beschriebenen Vorteile noch mehr und deutlicher zur Geltung bringen.

Das erfindungsgemäße Verfahren zur Herstellung eines Rades für ein Schienenfahrzeug ist durch die Merkmale des Patentanspruchs 9, eine vorteilhafte Weiterführung davon durch die Merkmale in Anspruch 10, gekennzeichnet.

Das erfindungsgemäße Herstellungsverfahren erlaubt die optimale Anpassung des Radprofils an den Krümmungsverlauf des Schienenprofils, zur Optimierung der Berührbedingungen und der Berührgeometrie für den Geradeauslauf bei Hochgeschwindigkeit, eine geräusch- und verschleißarme Bogenfahrt kombiniert mit möglichst geringen Profilformänderungen über die Lebensdauer des Rades. Das Verfahren ist zwar für die Herstellung spezieller Bauteile an sich bekannt, wurde aber für die Herstellung von Radprofilen in Abstimmung auf ein Schienenprofil noch nie angewandt oder für diese Anwendung erwähnt oder vorgeschlagen.

Vorteilhafterweise werden beim Herstellungsverfahren Wertepaare für das Radprofil generiert, deren Krümmung in Abhängigkeit des Tangens der Steigung eine in jedem Punkt absolut kleinere Krümmung mit gleichmäßigem Abstand zur entsprechenden Kurve des Schienenprofils ergeben, vorzugsweise mit stetig zunehmendem Abstand zu größeren Tangenswerten hin.

In der nachfolgenden Beschreibung wird die Erfindung anhand einiger bevorzugter Ausführungsbeispiele unter Bezugnahme auf die beigefügten Zeichnungen und Tabellen näher erläutert.

Dabei zeigen

- Fig. 1: schematisch ein Radprofil mit charakteristischen Meßebenen und verschiedenen charakteristischen Punkten des Profils.
- Fig. 2: die Geometrie eines herkömmlichen und von vier erfindungsgemäßen Profilen,
- Fig. 3: ein Detail des Profilverlaufs für die Radprofile entsprechend Fig. 2 im Bereich der Hohlkehle des Rades in größerem Maßstab,
- Fig. 4a: den Verlauf der Profilkrümmung über dem Tangens der Profilsteigung für die Profile der Fig. 2,
- Fig. 4b: den Verlauf der Profilkrümmung über dem Tangens der Profilsteigung für ein erfindungsgemäßes Radprofile im Vergleich zum Verlauf einer bestimmten Schiene,
- Fig. 5: die äquivalente Konizität der Radprofile entsprechend Fig.2 auf einem idealen Schienenprofil in Abhängigkeit verschiedener Spurweiten,
- Fig. 6: die äquivalente Konizität der Radprofile entsprechend Fig. 2 auf verschlissenen Schienen einer in Betrieb stehenden Strecke für einige Stellen dieser Strecke,
- Fig. 7: die Rollradiendifferenz der Radprofile entsprechend Fig. 2 auf einer realen kurvenreichen Strecke mit verschlissenen Schienen,
- Fig. 8 bis Fig. 19: die äquivalente Konizität in Abhängigkeit der Linearisierungsamplitude, die Rollradiendifferenz sowie den Kontaktwinkel in Abhängigkeit der Querverschiebung für die vier Ausführungsformen der erfindungsgemäßen Profile in Vergleich zu dem herkömmlichen Radprofil auf einem realen Schienenverlauf zur Charakterisierung der Berührgeometrie Rad/Schiene.
- Tab. 1: faßt die Koordinaten der Bezugspunkte P₁ bis P₄ und die in diesen Punkten auftretende Krümmung und Steigung sowie die Spurkranzdicke S_{d} und die Spurkranzhöhe Sₕ für vier Ausführungsformen des erfindungsgemäßen Radprofiles sowie des herkömmlichen Radprofils S1002 zusammen.
- Tab. 2: zeigt zur Beschreibung der Profile die Wertepaare in x- und y-Richtung für das herkömmliche Radprofil S1002 sowie die vier erfindungsgemäßen Radprofile von der Meßkreisebene M zu beiden Seiten im Ausmaß von 60 mm.

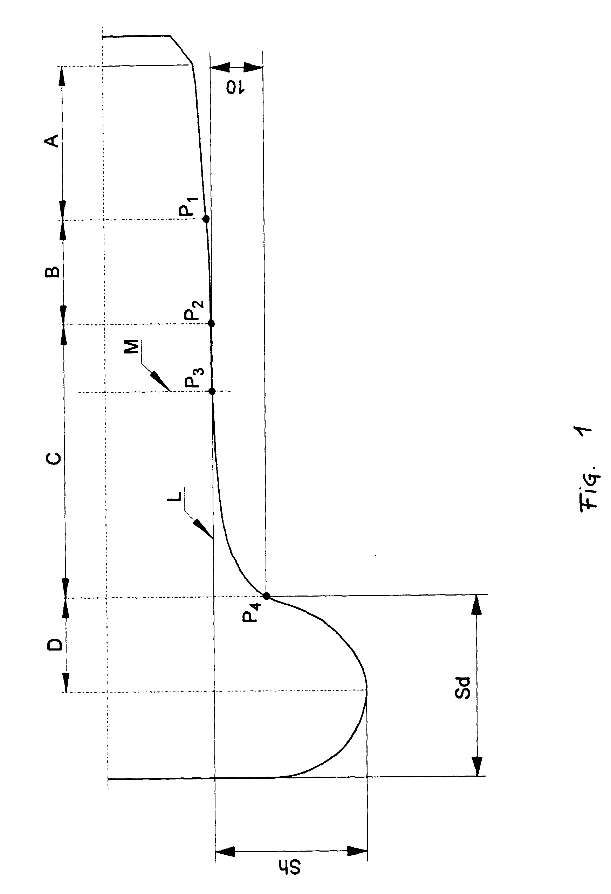

Fig. 1 erläutert die verwendeten Bezugsmaße, Bezugsebenen und charakteristischen Punkte eines Radprofils. welche den Unterschiede der erfindungsgemäßen Radprofile zu herkömmlichen Profilen verdeutlichen. In Fig. 1 der Teil des Rades eines Schienenfahrzeuges dargestellt, wobei sich links die senkrechte Radinnenseite befindet und rechts die Radaußenseite. Von der Radaußenseite verläuft das Radprofil herkömmlicherweise zuerst in einem nicht gekrümmten Teil A mit konstanter Steigung, standardmäßig mit Steigung 1:15, bis dem Bezugspunkt P₁, wo das Profil in den gekrümmten Laufflächenabschnitt B, C, D mit stetig veränderlicher Profilsteigung übergeht. Dabei verläuft das Profil im Abschnitt B positiv gekrümmt bis zum Wendepunkt P₂ und geht dann in einen negativ gekrümmten Laufflächenabschnitt C über. Der Referenzpunkt P₃ stellt den Schnittpunkt der Meßkreisebene M mit der Lauffläche des Rades dar. Durch diesen Punkt kann tangential zum Rad und parallel zur Radachse eine Ebene L gelegt werden, die zur Charakterisierung des Radprofiles als Bezugsebene herangezogen wird. Im Profilabschnitt C geht die Lauffläche in die Hohlkehle zum Spurkranz des Rades über, dessen Höhe Sₕ in bezug auf die Ebene L gemessen wird. Einen weiteren Bezugspunkt P₄ stellt der Schnittpunkt einer zur Ebene L und um 10 mm nach außen beabstandeten Ebene mit dem Radprofil dar. Von Punkt P₄ zur linken Radstirnseite wird die Spurkranzdicke S_{d} gemessen, welche ein weiteres Bezugsmaß des Radprofiles ist.

Tabelle 1 faßt die Lage der charakteristischen Punkte P₁ bis P₄ und die in diesen Punkten auftretende Krümmung und Steigung der Lauffläche für vier Ausführungsformen des erfindungsgemäßen Radprofils und das herkömmliche Radprofil S1002 zusammen. Der Ursprung des als Bezug dienenden rechtwinkeligen Koordinatensystem wurde in den Bezugspunkt P₃ gelegt, wobei die x-Achse in der Ebene L liegt. Gegenüber dem bekannten Radprofil liegen die Punkte P₁ und P₂ bei nur geringer Änderung des Radialabstandes zur Achse bezüglich der Meßkreisebene beträchtlich weiter außerhalb als beim herkömmlichen Radprofil. Punkt P₄ hingegen ist weiter zur Radsatzmitte hin verschoben. Es ergibt sich daher erfindungsgemäß ein flacherer und kontinuierlicherer Verlauf der Lauffläche, was auch zu einer Verringerung der äquivalenten Konizität und damit besserem Stabilitätsverhalten bei Geradeausfahrten mit hoher Geschwindigkeit führt. Selbst bei ungünstiger Toleranzlage können für die äquivalente Konizität Werte von ca. 0,2 erzielt werden. Durch Abstimmung auf durchschnittlich verschlissene Schienenprofile, durch Messungen auf vielen befahrenen Streckenabschnitten, resultiert ein kontinuierlicher Verlauf der Profilkrümmung über die Laufflächenbreite. Dadurch wird eine sehr hohe Formstabilität des Profils über die Zeit gewährleistet.

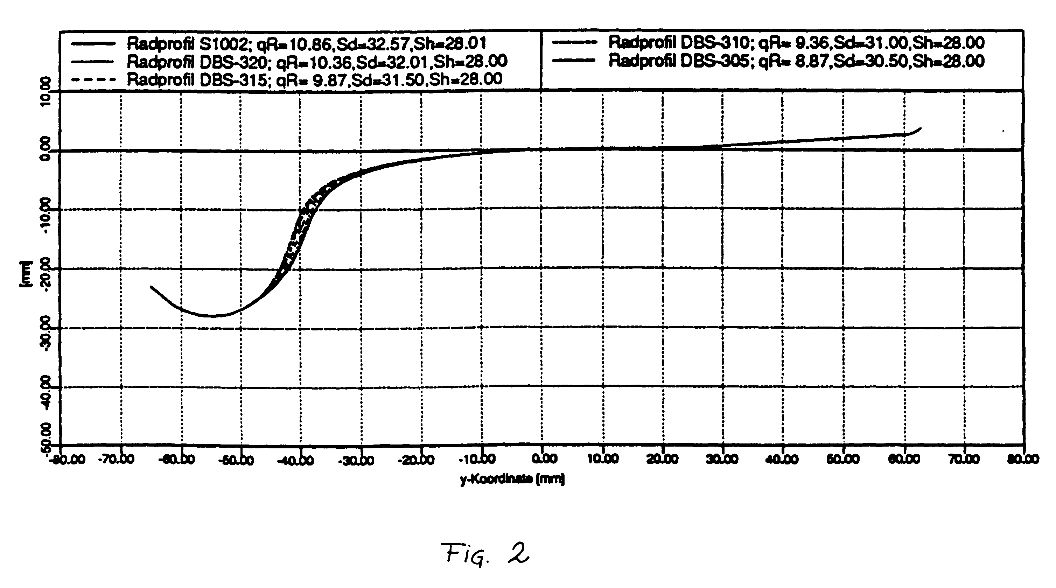

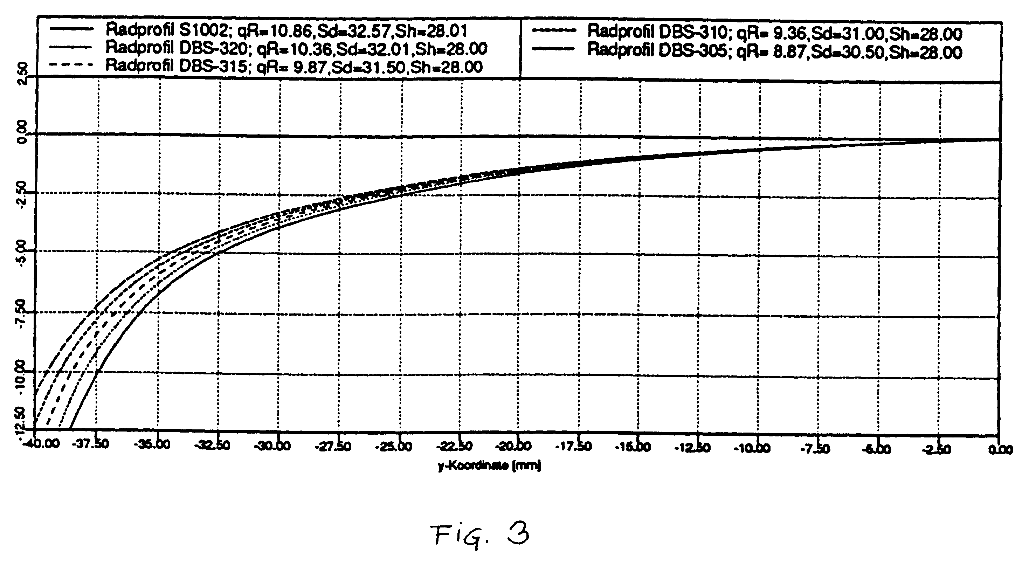

Fig. 2 zeigt die Profilkonturen der in Tab. 1 dokumentierten Radprofile bezogen auf das Koordinatensystem mit Ursprung in Punkt P₃, und Fig. 3 ein Detail der Profilkontur vom Ursprung des Koordinatensystems bis in die Hohlkehle in vierfach vergrößertem Maßstab. Dabei kommt zum Ausdruck. daß der größte Unterschied zum herkömmlichen Radprofil Sl002 im Bereich der Spurkranzflanke gegeben ist. Dieser Unterschied ist für die Rollradiendifferenz, welcher die Bogenfahrteigenschaften charakterisiert von großer Bedeutung. Entsprechend dem herkömmlichen Radprofil S1002 kann auch beim erfindungsgemäßen Profil ein radaußenseitiger Profilauslauf mit konstanter Steigung, vorzugsweise einer Steigung von 1:15, vorgesehen sein und die Krümmung in Punkt P₁ 0 sein. Allerdings können auch bei anderer Gestaltung des Profilauslaufs die oben beschriebenen Effekte und Vorteile des erfindungsgemäßen Profilverlaufes erzielt werden.

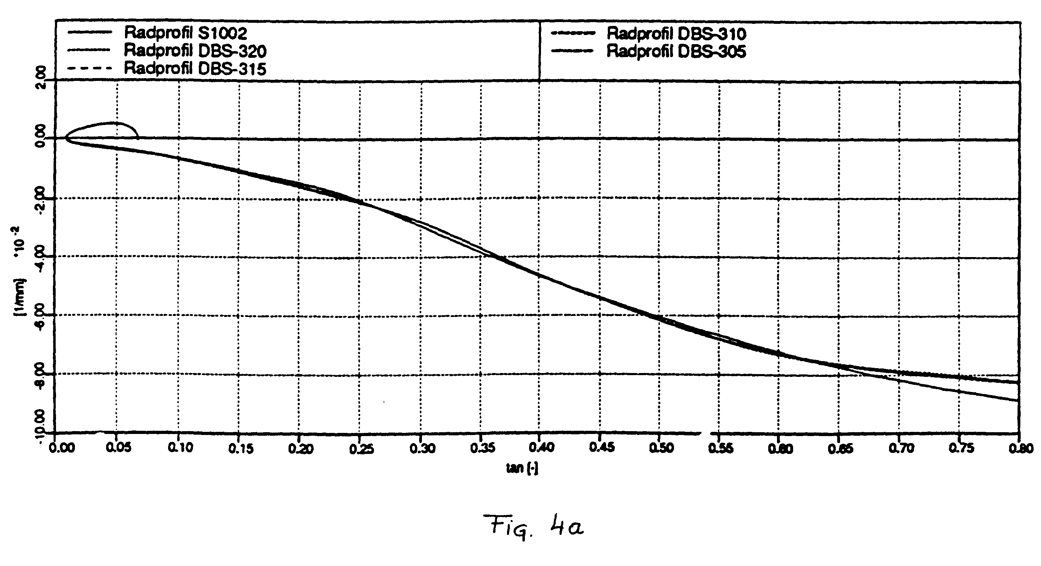

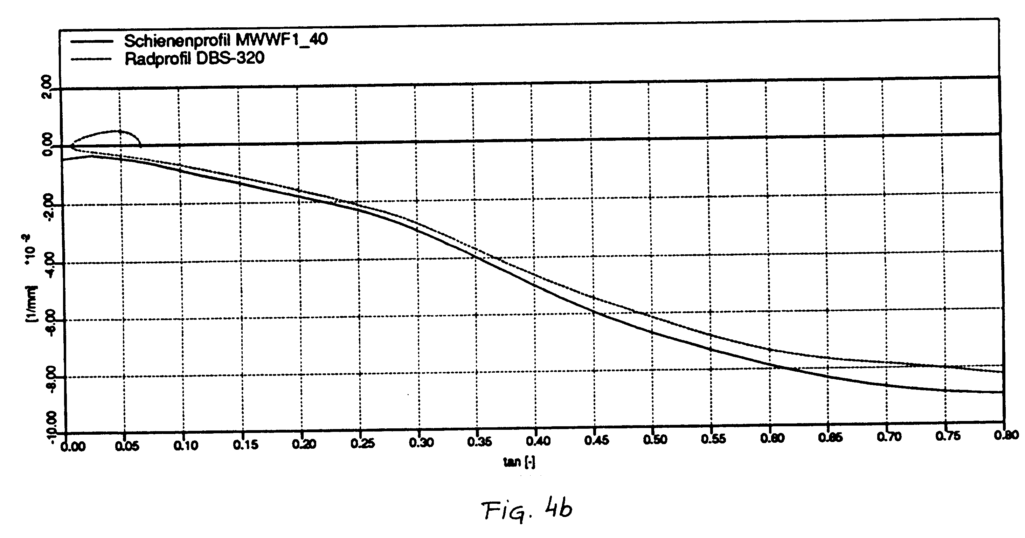

Fig. 4a zeigt die Profilkrümmung eines herkömmlichen und der vier Ausführungsformen des erfindungsgemäßen Radprofils in Abhängigkeit des Tangens der Profilsteigung. Die Verläufe der erfindungsgemäßen Profile ändern sich gleichmäßiger als jener des herkömmlichen Profils, was wiederum auf den stetigeren Profilverlauf hinweist. Von besonderer Bedeutung sind die in Fig. 4b dargestellten Verläufe der Profilkrümmung in Abhängigkeit der Profilsteigung für ein erfindungsgemäßes Radprofil und ein Schienenprofil. Der Krümmungsverlauf des Radprofils wurde so gewählt, daß die Krümmung bei gleichen Werten des Tangens der Profilsteigung immer absolut kleiner ist, als jene des Schienenprofils. Darüberhinaus nimmt der Abstand der Krümmungskurven von Schiene und Radprofil mit steigendem Tangens der Profilsteigung langsam und stetig zu. Zur Herstellung des erfindungsgemäßen Radprofils in Abstimmung auf bestimmte Schienenprofile wird der Krümmungsverlauf über die Profilsteigung der Schiene ermittelt. Dies kann ebenso bei neu verlegten Schienen, als auch bei durchschnittlich verschlissenen Schienen auf befahrenen Strecken, auf welche das Radprofil abgestimmt werden soll, geschehen. Unter Vorgabe eines gewählten Abstandsverlaufes der Profilkrümmung von der Kurve der Schienenkrümmung über dem Tangens der Profilsteigung wird eine Kurve für die Radprofilkrümmung erzeugt. welche in Wertepaare bezogen auf das oben erwähnte rechtwinkelige Koordinatensystem umgerechnet wird. Mit diesen Werten kann eine numerisch gesteuerte Drehmaschine gesteuert werden oder von einem Rechner direkt an die Maschine übergeben werden, um aus einem Rohling das Rad für ein Schienenfahrzeug mit dem erfindungsgemäßen Profil herzustellen.

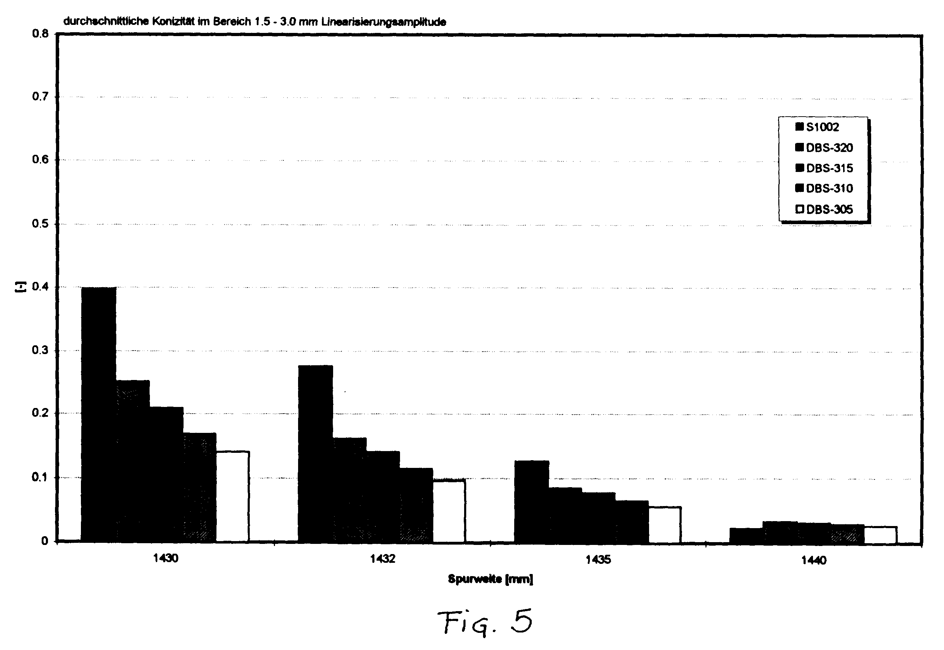

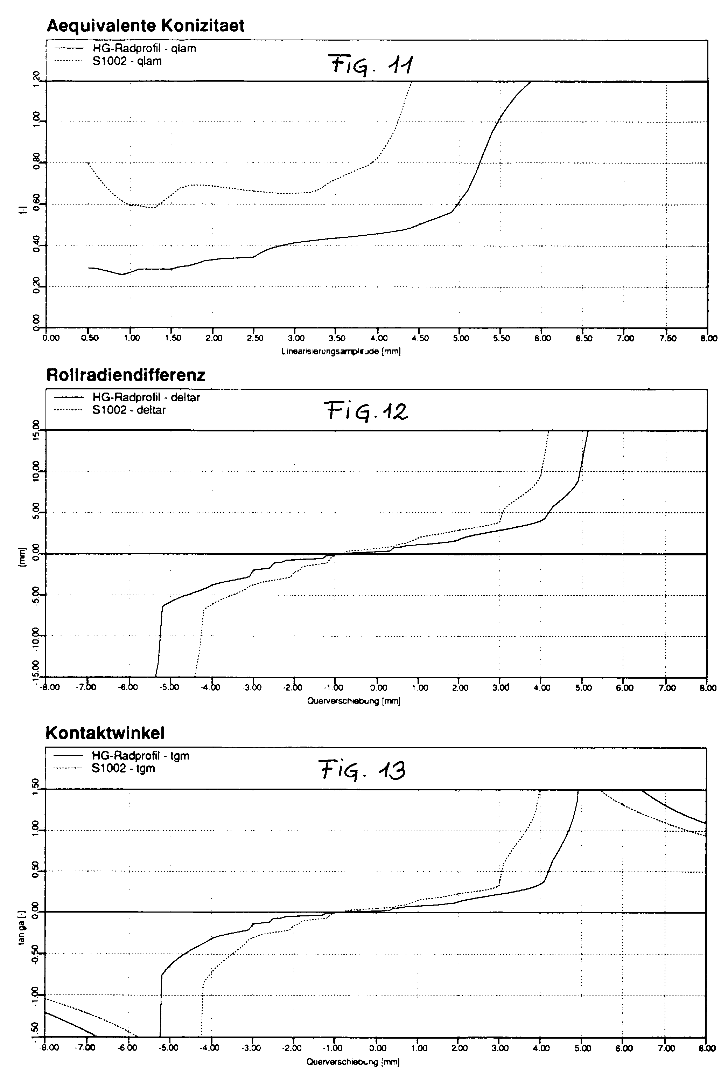

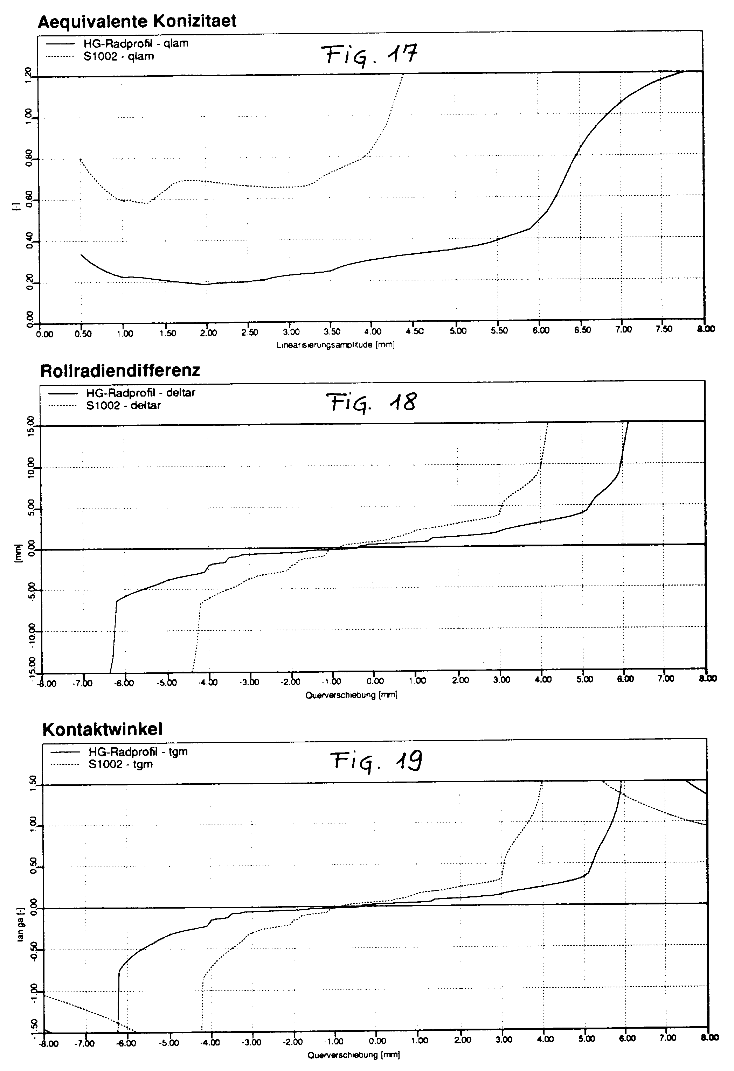

Unter Bezugnahme auf die Fig. 5 bis 19 werden die Vorteile der erfindungsgemäßen Radprofile gegenüber dem herkömmlichen Radprofil S1002 erläutert.

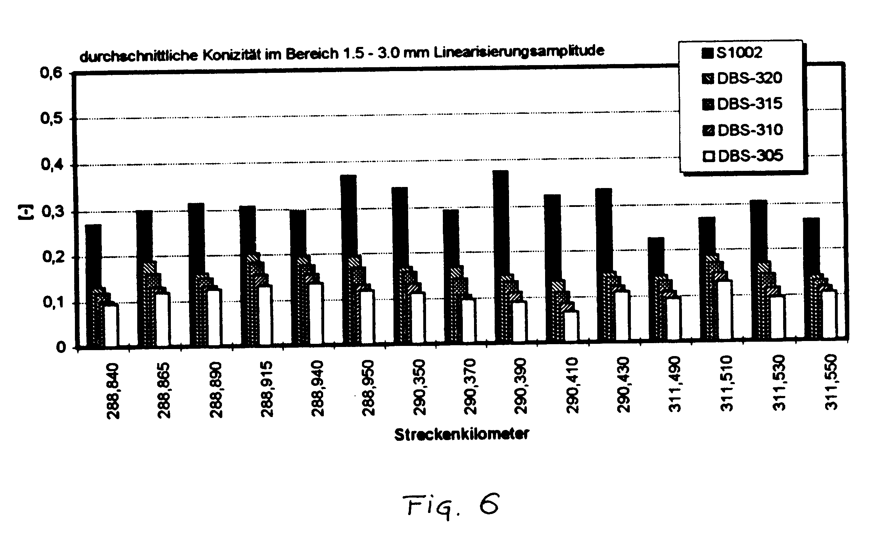

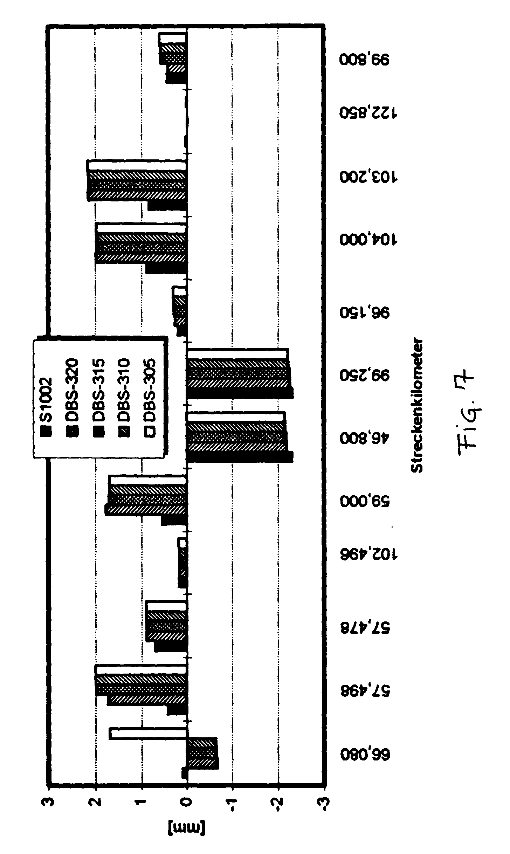

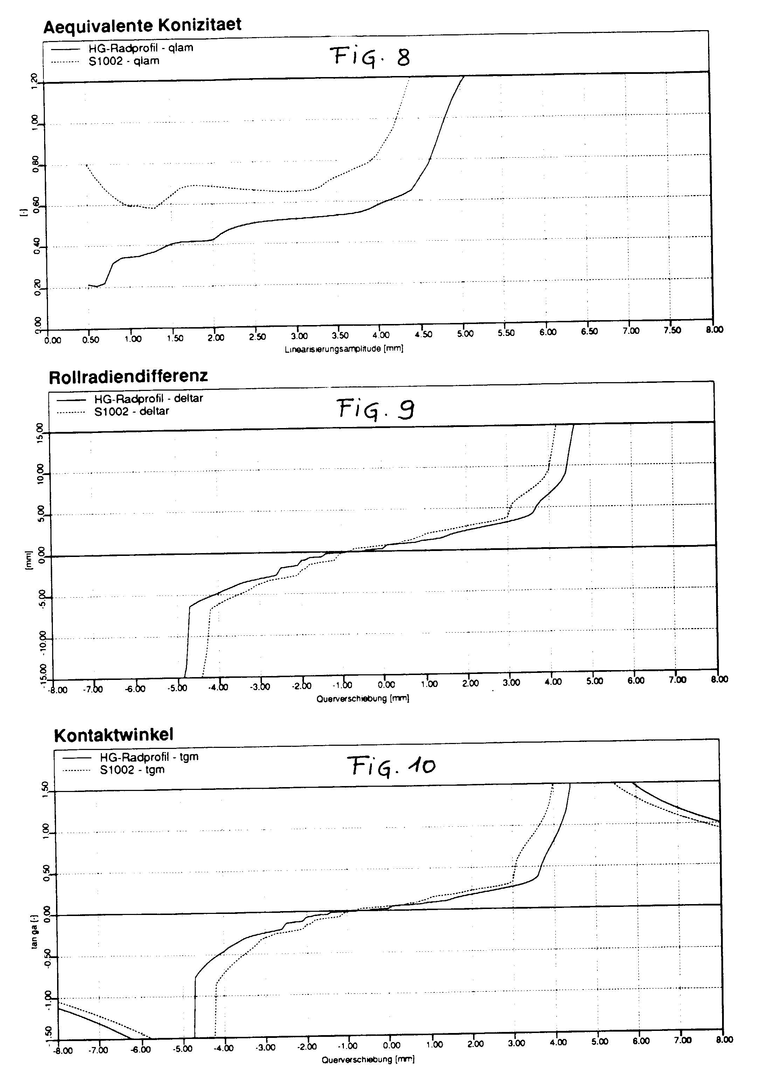

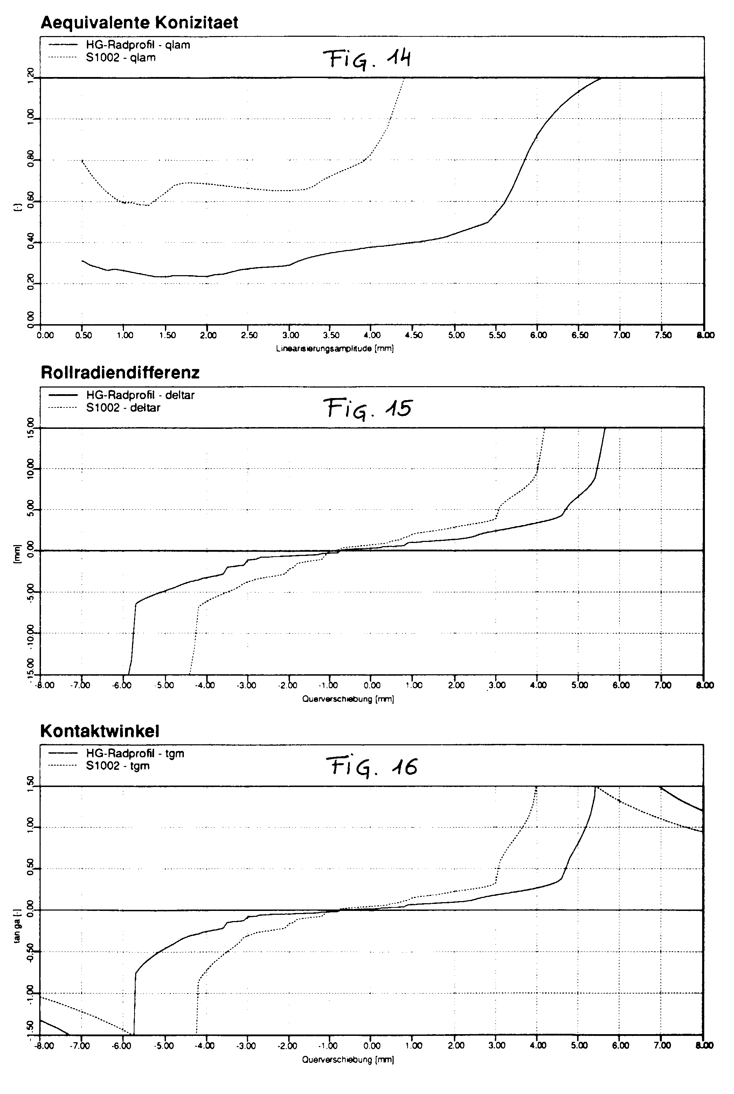

Fig. 5 zeigt für die in Fig. 2 dargestellten und in Tab. 1 und Tab. 2 angegebenen Radprofile die äquivalente Konizität als Maß für die Hochgeschwindigkeitsstabilität bei verschiedenen Spurweiten auf einer optimierten Neuschiene. Für Spurweiten im Bereich von 1430 mm bis 1435 mm bei Linearisierungsamplituden von 1,5 mm bis 3 mm zeigen die erfindungsgemäßen Profile gegenüber dem herkömmlichen Profil eine deutliche Verminderung der durchschnittlichen Konizität, gleichbedeutend mit einer höheren Stabilität. Aus Fig. 6, welche die äquivalente Konizität der Radprofile auf verschlissenen Schienen einer in Betrieb stehenden Strecke für einige Stellen dieser Strecke zeigt, geht deutlich hervor, daß die erfindungsgemäßen Radprofile optimal auf die verschlissenen Schienen abgestimmt sind. Fig. 7 zeigt die für die Bogenfahrt charakterisierende Rollradiendifferenz für eine bestehende, sehr kurvenreichen Strecke mit engen Bögen. Dabei weist die Rollradiendifferenz der erfindungsgemäßen Radprofile bis auf eine Ausnahme jeweils größere Reserven auf als das herkömmliche Radprofil S1002. Fig. 8 bis Fig. 10 zeigt die äquivalente Konizität in Abhängigkeit der Linearisierungsamplitude, die Rollradiendifferenz sowie den Kontaktwinkel in Abhängigkeit der Querverschiebung für die erste Ausführungsform des erfindungsgemäßen Radprofils DBS-320 in Vergleich zu dem herkömmlichen Radprofil S1002 auf einem realen Schienenverlauf zur Charakterisierung der Berührgeometrie Rad/Schiene. Die Verläufe verdeutlichen die Vorteile des erfindungsgemäßen Profils gegenüber dem herkömmlichen Profil. Fig. 11 bis Fig. 13 zeigen die Verläufe entsprechend den Fig. 8 bis Fig. 11 für das erfindungsgemäße Profil DB-315, Fig. 14 bis Fig. 16 für das erfindungsgemäße Profil DB-310 und Fig. 17 bis Fig. 19 für das erfindungsgemäße Profil DB-305 in Vergleich zu dem herkömmlichen Profil S1002.

Auch für andere gebräuchliche Schienenprofile können durch die erfindungsgemäße Profilgestaltung des Schienenrades die Berührgeometrie, insbesondere die äquivalente Konizität und die Rollradiendifferenz, für stabilen Hochgeschwindigkeitsgeradeauslauf in Kombination mit verschleißarmem und leisem Bogenlauf bei gleichmäßiger Profilabnutzung optimiert werden. Die erfindungsgemäße Profilgestaltung ist somit für eine große Zahl von üblichen Schienenprofilen, speziell in deren durchschnittlich verschlissenen Zustand, mit Vorteil verwendbar.

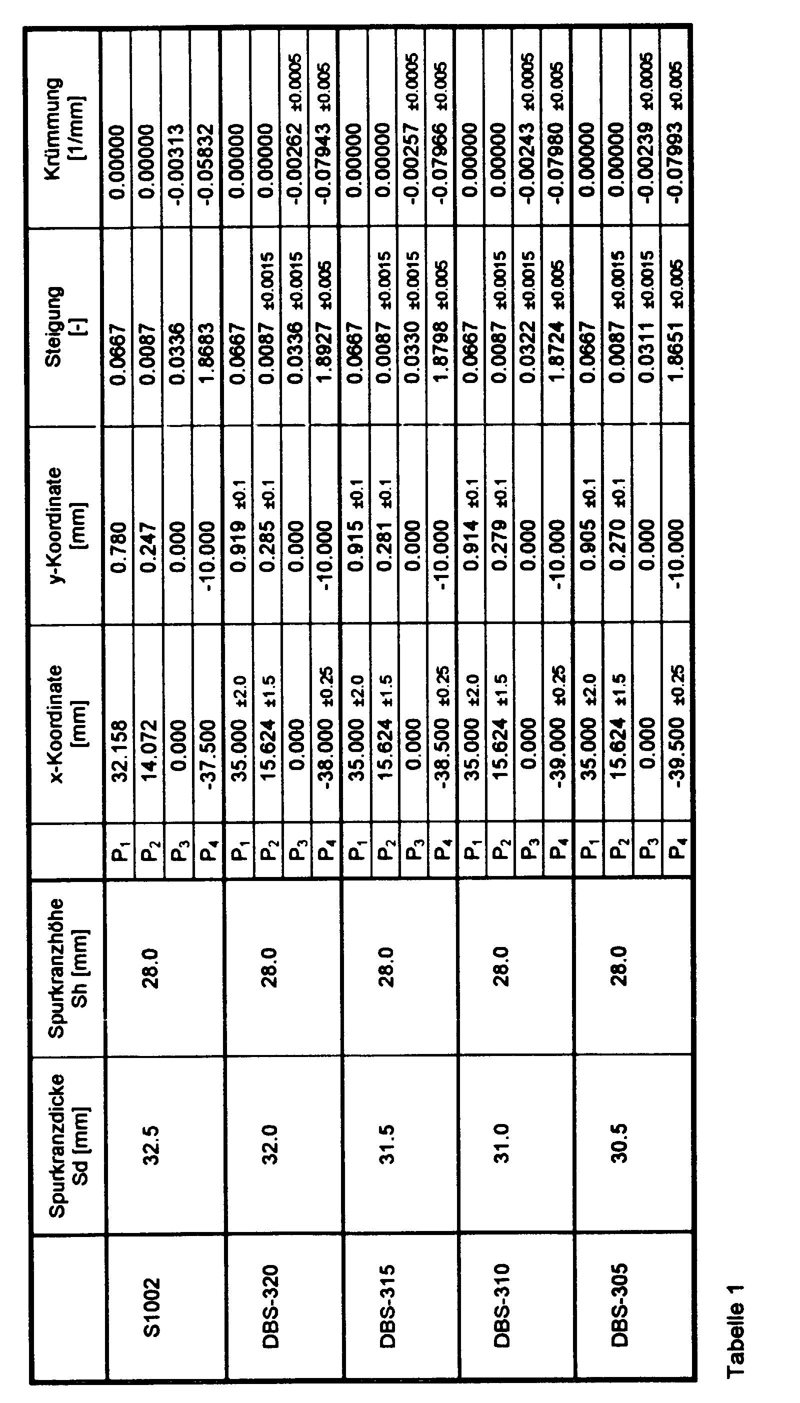

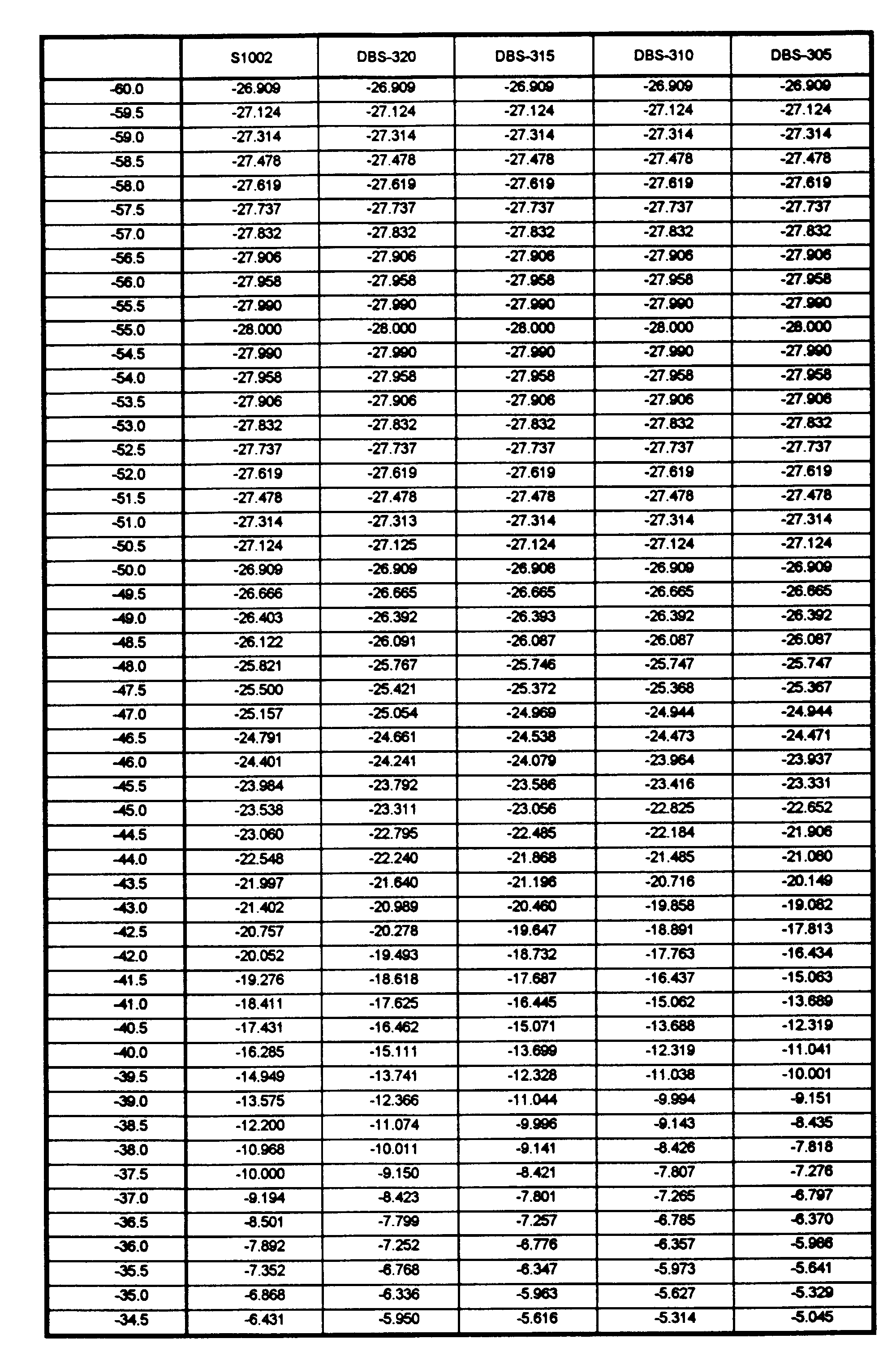

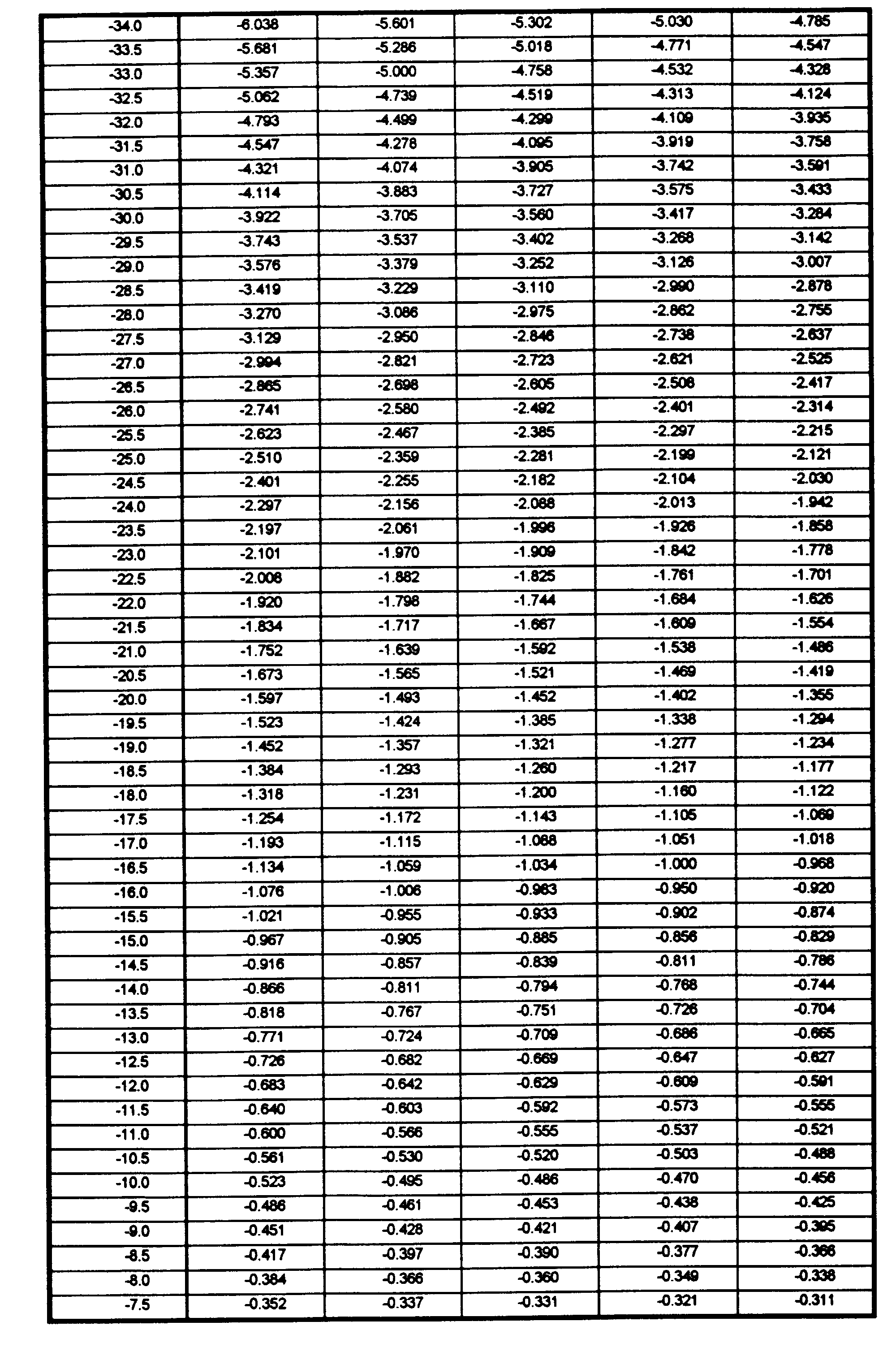

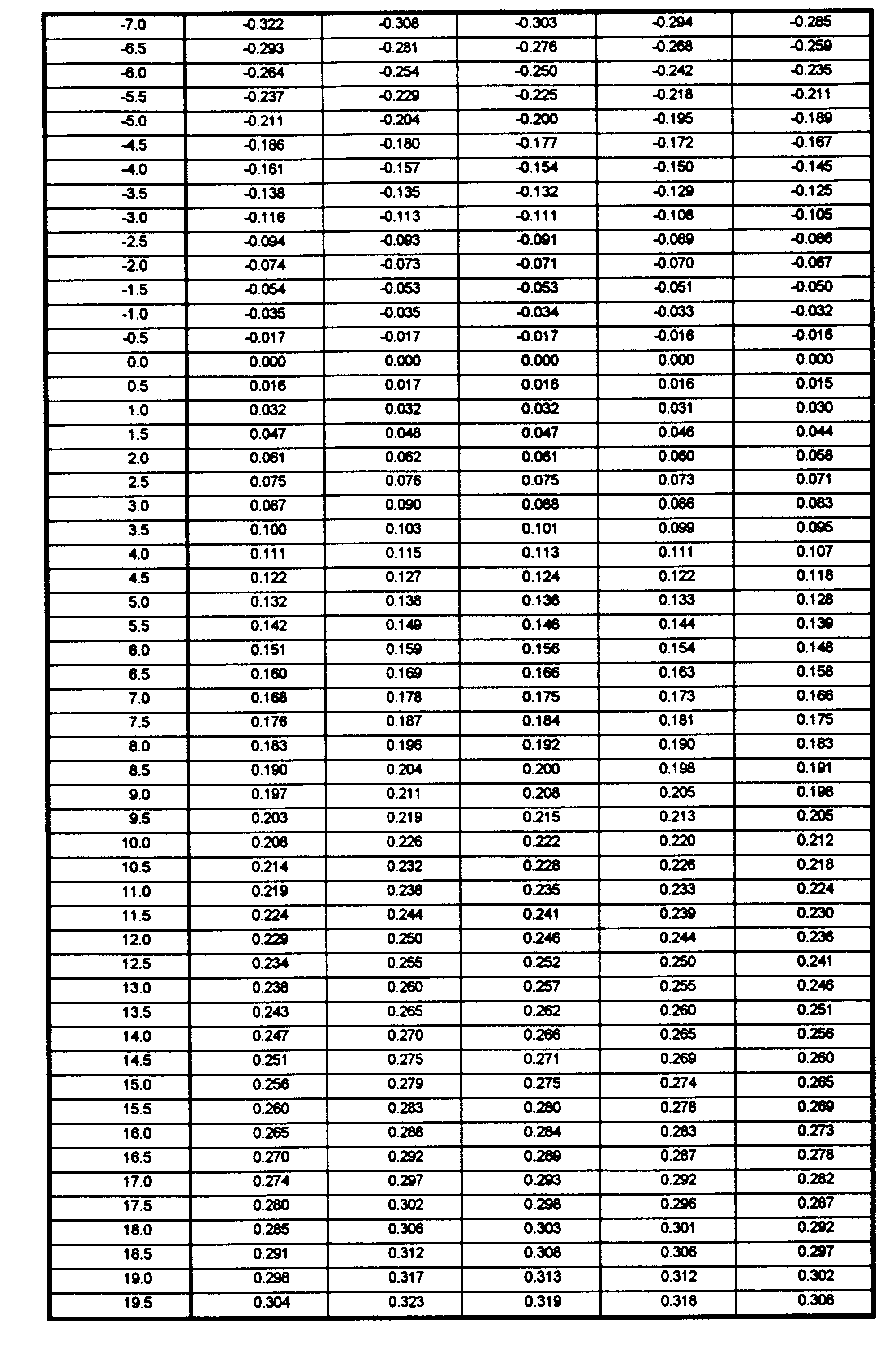

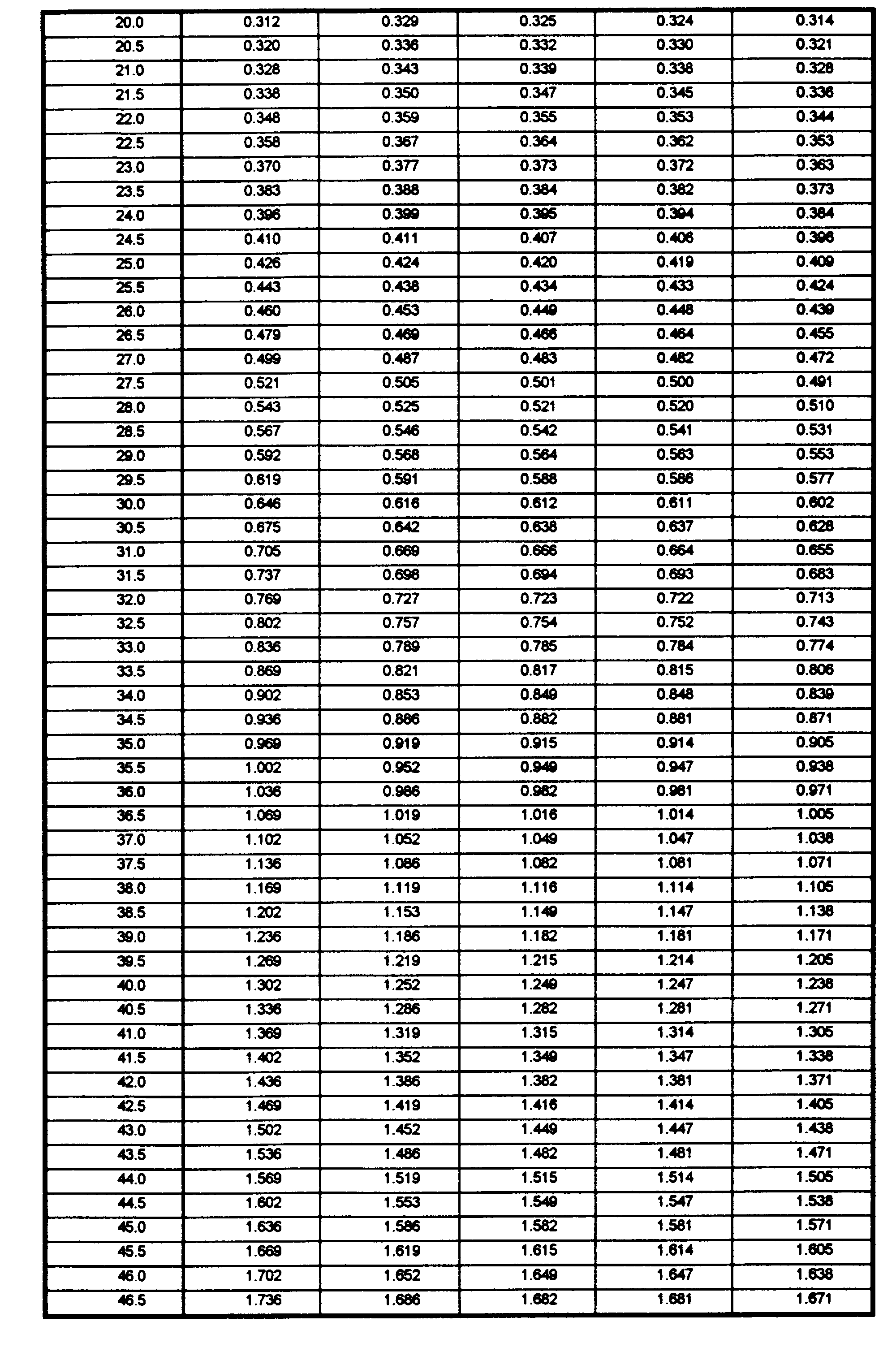

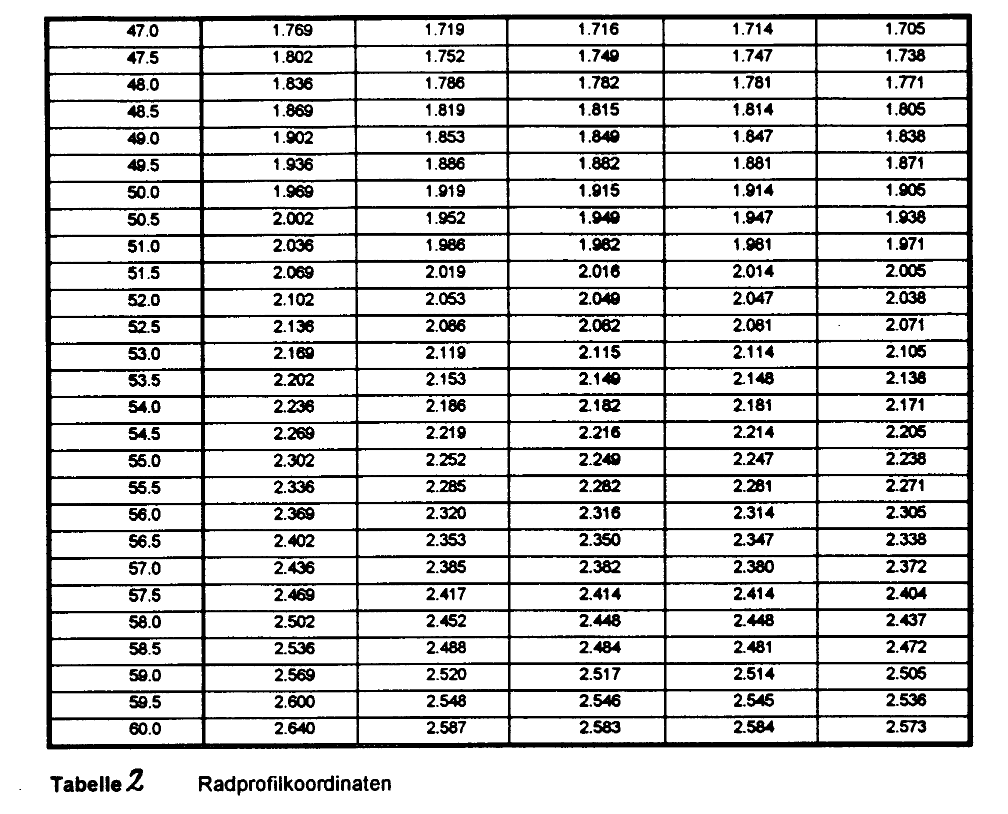

## Patentansprüche

1. Rad für ein Schienenfahrzeug, insbesondere zum Einsatz in Trieb- oder Laufdrehgestellen, mit einem Profilauslauf an der Radaußenseite, einer aus einem konvexen und darauffolgenden konkaven Teil bestehenden gekrümmten Lauffläche und einem Spurkranz an der Radinnenseite mit einer gegenüber der Horizontalen um zumindest 65° geneigten äußeren Spurkranzflanke, dadurch gekennzeichnet, daß der Anfangspunkt (P₁) des Profilauslaufes zumindest 33 mm, vorzugsweise 35 mm, außerhalb der Meßkreisebene (M) und höchstens 1,019 mm, vorzugsweise 0,919 mm, in bezug auf die Radachse innerhalb einer achsparallelen und durch einen Schnittpunkt (P₃) der Meßkreisebene (M) mit der Lauffläche gehenden Ebene (L) liegt, daß der Wendepunkt (P₂) zwischen dem konvexen und konkaven Teil der gekrümmten Lauffläche zumindest 14 mm, vorzugsweise 15,624 mm, außerhalb der Meßkreisebene (M) und höchstens 0,385 mm, vorzugsweise 0,285 mm, in bezug auf die Radachse innerhalb einer achsparallelen und durch den Schnittpunkt (P₃) der Meßkreisebene (M) mit der Lauffläche gehenden Ebene (L) liegt, daß der Spurkranz 10 mm in bezug auf die Radachse außerhalb einer achsparallelen und durch den Schnittpunkt (P₃) der Meßkreisebene (M) mit der Lauffläche gehenden Ebene (L) eine Dicke S_{d} von maximal 32,25 mm, vorzugsweise 32 mm, hat, daß im Wendepunkt (P₂) die Steigung maximal 0,0102, vorzugsweise 0.0087 beträgt und die Krümmung 0 ist, im Schnittpunkt (P₃) die Steigung maximal 0,0351, vorzugsweise 0,0336, und der Betrag der negativen Krümmung höchstens 0,00312 mm⁻¹, vorzugsweise 0,00262 mm⁻¹, betragen und im Schnittpunkt (P₄) einer 10 mm in bezug auf die Radachse außerhalb der Ebene (L) parallel zu dieser verlaufenden Ebene mit der Spurkranzflanke, welcher Schnittpunkt mindestens 37,75 mm, vorzugsweise 38 mm, innerhalb der Meßkreisebene (M) liegt, die Steigung höchstens 1,8977, vorzugsweise 1,8927, und der Betrag der negativen Krümmung mindestens 0,07443 mm⁻¹, vorzugsweise 0,07943, betragen, wobei vorzugsweise im Anfangspunkt (P₁) des Profilauslaufes (A) die Steigung maximal 0,0667 beträgt und/oder die Krümmung 0 ist.

2. Rad nach Anspruch 1, dadurch gekennzeichnet, daß sein Radprofil durch die in Tabellenspalte DBS-320 der Tabelle angegebenen Werte definiert ist.

3. Rad nach Anspruch 1, dadurch gekennzeichnet, daß der Anfangspunkt (P₁) höchstens 1,015 mm. vorzugsweise 0.915 mm. innerhalb der Ebene (L) liegt, daß der Wendepunkt (P₂) zur gekrümmten Lauffläche höchstens 0,381 mm, vorzugsweise 0,281 mm, innerhalb der Ebene (L) liegt. daß der Spurkranz 10 mm außerhalb der Ebene (L) eine Dicke S_{d} von maximal 31.75 mm. vorzugsweise 31.5 mm, hat, daß im Schnittpunkt (P₃) die Steigung maximal 0.0345, vorzugsweise 0.033, und der Betrag der negativen Krümmung höchstens 0.00307 mm⁻¹, vorzugsweise 0,00257 mm⁻¹, betragen und im Schnittpunkt (P₄) die Steigung höchstens 1,8848, vorzugsweise 1,8798, und der Betrag der negativen Krümmung mindestens 0,07466 mm⁻¹, vorzugsweise 0,07966 mm⁻¹, betragen.

4. Rad nach Anspruch 3. dadurch gekennzeichnet, daß sein Radprofil durch die in Tabellenspalte DBS-315 der Tabelle angegebenen Werte definiert ist.

5. Rad nach Anspruch 3, dadurch gekennzeichnet, daß der Anfangspunkt (P₁) höchstens 1,014 mm, vorzugsweise 0.914 mm. innerhalb der Ebene (L) liegt, daß der Wendepunkt (P₂) zur gekrümmten Lauffläche höchstens 0,379 mm, vorzugsweise 0,279 mm, innerhalb der Ebene (L) liegt. daß der Spurkranz 10 mm außerhalb der Ebene (L) eine Dicke S_{d} von maximal 31,25 mm, vorzugsweise 31 mm, hat, daß im Schnittpunkt (P₃) die Steigung maximal 0.0337, vorzugsweise 0,0322, und der Betrag der negativen Krümmung höchstens 0.00293 mm⁻¹, vorzugsweise 0,00243 mm⁻¹, betragen und im Schnittpunkt (P₄) die Steigung höchstens 1,8774, vorzugsweise 1,8724, und der Betrag der negativen Krümmung mindestens 0.07480 mm⁻¹, vorzugsweise 0,0798 mm⁻¹, betragen.

6. Rad nach Anspruch 5, dadurch gekennzeichnet, daß sein Radprofil durch die in Tabellenspalte DBS-310 der Tabelle angegebenen Werte definiert ist.

7. Rad nach Anspruch 5. dadurch gekennzeichnet, daß der Anfangspunkt (P₁) höchstens 1,005 mm, vorzugsweise 0,905 mm, innerhalb der Ebene (L) liegt, daß der Wendepunkt (P₂) zur gekrümmten Lauffläche höchstens 0,37 mm, vorzugsweise 0,27 mm, innerhalb der Ebene (L) liegt. daß der Spurkranz 10 mm außerhalb der Ebene (L) eine Dicke S_{d} von maximal 30,75 mm, vorzugsweise 30,5 mm, hat, daß im Schnittpunkt (P₃) die Steigung maximal 0,0326, vorzugsweise 0,0311, und der Betrag der negativen Krümmung höchstens 0,00289 mm⁻¹, vorzugsweise 0,00239 mm⁻¹, betragen und im Schnittpunkt (P₄) die Steigung höchstens 1,8701, vorzugsweise 1,8651, und der Betrag der negativen Krümmung mindestens 0,07293 mm⁻¹, vorzugsweise 0,07993, betragen.

8. Rad nach Anspruch 7, dadurch gekennzeichnet, daß sein Radprofil durch die in Tabellenspalte DBS-305 der Tabelle angegebenen Werte definiert ist.

9. Verfahren zur Herstellung eines Rades für ein Schienenfahrzeug, insbesondere zum Einsatz in Trieb- oder Laufdrehgestellen, mit einem Profilauslauf an der Radaußenseite, einer aus einem konvexen und darauffolgenden konkaven Teil bestehenden gekrümmten Lauffläche und einem Spurkranz an der Radinnenseite mit einer gegenüber der Horizontalen um zumindest 65° geneigten äußeren Spurkranzflanke, durch Drehen des Radprofiles aus einem Rohling, dadurch gekennzeichnet, daß das durchschnittliche Profil der Schiene, für welche das Schienenfahrzeug bestimmt ist, und dessen Steigungs- und Krümmungsverlauf ermittelt wird, wonach in einem Rechner Wertepaare für das Radprofil generiert werden. die eine in jedem Punkt absolut kleinere Krümmung als jene des Schienenprofils mit über den Tangens der Steigung stetigem Verlauf ergeben, welche Wertepaare einer Kontrolleinheit eines Drehwerkzeuges zur Herausarbeitung des Radprofils übermittelt werden.

10. Verfahren nach Anspruch 9, dadurch gekennzeichnet, daß Wertepaare für das Radprofil generiert werden. deren Krümmung über dem Tangens der Steigung eine in jedem Punkt absolut kleinere Krümmung mit gleichmäßigem Abstand zur entsprechenden Kurve des Schienenprofils ergeben, vorzugsweise mit stetig zunehmendem Abstand zu größeren Tangenswerten hin.
